# FASCICULE DE BREVET EUROPEEN

(11) **EP 2 499 030 B1**
(45) Date de publication et mention de la délivrance du brevet: **29.07.2015**
(21) Numéro de dépôt: 10776773.3
(22) Date de dépôt: 30.09.2010
(51) Int. Cl.: B60S 5/06, B60K 1/04, H01M 2/10, H01M 10/42, B60L 11/18

(54) **PROCEDE ET SYSTEME DE REMPLACEMENT D'UN CONTENEUR D'ENERGIE D'ALIMENTATION D'UN MOTEUR D'ENTRAINEMENT D'UN VEHICULE AUTOMOBILE**
VERFAHREN UND SYSTEM ZUM AUSTAUSCH EINES EINGANGSSTROMBEHÄLTER FÜR EINEN ANTRIEBSMOTOR EINES MOTORFAHRZEUGS
METHOD AND SYSTEM FOR REPLACING A CONTAINER OF INPUT ENERGY FOR A DRIVE MOTOR OF A MOTOR VEHICLE

(30) Priorité: 10.11.2009 FR 0957924
(43) Date de publication de la demande: 19.09.2012
(73) Titulaire: Renault SAS, 92100 Boulogne Billancourt (FR)
(72) Inventeur: LOMBARTE, Charles, F-78640 Saint Germain De La Grange (FR)
(86) Numéro de dépôt international: PCT/FR2010/052068
(87) Numéro de publication internationale: WO 2011/058253

(56) Documents cités:
- DE-A1-102007 032 210
- GB-A- 2 396 851
- US-A- 5 612 606
- US-A1- 2007 113 921

## Description

La présente invention se rapporte à un procédé de remplacement d'un conteneur d'énergie d'alimentation d'un moteur d'entraînement d'un véhicule automobile. L'invention se rapporte également à un système de remplacement d'un conteneur d'énergie d'alimentation d'un moteur d'entraînement d'un véhicule automobile permettant de mettre en oeuvre un tel procédé de remplacement et un support de données permettant de mettre en oeuvre un tel procédé de remplacement. L'invention se rapporte encore à une station de remplacement d'un conteneur d'énergie d'alimentation d'un moteur d'entraînement d'un véhicule automobile.

Certains véhicules automobiles, comme les véhicules électriques ou hybrides, comprennent un conteneur d'énergie d'alimentation d'un moteur d'entraînement, comme une batterie d'accumulateurs électriques d'alimentation d'un moteur électrique. Il peut se révéler intéressant d'échanger ce conteneur, lorsque son niveau d'énergie est faible, contre un nouveau conteneur rempli d'énergie. Ceci peut être fait dans une station similaire à une station service dans laquelle on peut remplir un réservoir d'essence d'un véhicule automobile.

On connaît du document US 5 612 606 une station d'échange de batterie électrique d'alimentation d'un moteur d'entraînement d'un véhicule électrique et un procédé pour réaliser un tel échange. Dans la station d'échange décrite, le conducteur positionne approximativement le véhicule dans un rail, contre une butée longitudinale par rapport aux équipements de la station. Par la suite, des moyens mobiles de dépose de la batterie électrique sont mis en oeuvre.

Pour un déploiement aisé des stations d'échange de conteneur d'énergie, il est nécessaire de les rendre, à moindre coût, compatibles avec l'ensemble des véhicules automobiles disponibles sur le marché et avec l'ensemble des batteries disponibles sur le marché. GB-A-2396851 montre le préambule de la revendication 1. Ainsi, le but de l'invention est de fournir un procédé de remplacement d'un conteneur remédiant aux inconvénients mentionnés précédemment et améliorant les procédés de remplacement connus de l'art antérieur. En particulier, l'invention propose un procédé de remplacement d'un conteneur d'énergie simple, économique et compatible avec divers types de véhicules automobiles et divers types de conteneurs. L'invention concerne encore un système de remplacement d'un conteneur d'énergie. L'invention concerne encore une station de remplacement muni d'un tel système de remplacement.

Selon l'invention, le procédé permet le remplacement d'un conteneur d'énergie d'alimentation d'un moteur d'entraînement d'un véhicule automobile. Il est caractérisé en ce qu'il comprend au moins une itération d'une phase comprenant les étapes suivantes :
- reconnaître le type du conteneur à déposer,
- adapter, si besoin, au moins un outil au type de conteneur,
- utiliser l'au moins un outil pour démonter le conteneur,
- déposer le conteneur,
- utiliser l'au moins un outil pour remonter un nouveau conteneur,
et en ce que l'étape « adapter au moins un outil au type de conteneur » comprend une étape de démontage, sur l'au moins un outil, d'un premier dispositif d'activation et de désactivation d'un premier moyen de verrouillage du conteneur sur le véhicule automobile et une étape de montage, sur l'au moins un outil, d'un deuxième dispositif d'activation et de désactivation d'un deuxième moyen de verrouillage du conteneur sur le véhicule automobiles.

La phase peut comprendre les étapes suivantes :
- reconnaître le type du véhicule automobile,
- mettre en position le véhicule automobile par rapport au sol sur lequel il repose.

L'étape « mettre en position le véhicule automobile par rapport au sol sur lequel il repose » peut comprendre une étape d'activation d'un dispositif exerçant des actions mécaniques sur le véhicule au niveau de lisses ou de zones d'appui de cric.

Les dispositifs d'activation et de désactivation des moyens de verrouillage du conteneur sur le véhicule automobile peuvent être montés sur au moins un robot manipulateur.

L'invention concerne un support d'enregistrement de données lisible par un calculateur sur lequel est enregistré un programme informatique comprenant des moyens de codes de programme informatique de mise en oeuvre des étapes du procédé de remplacement défini précédemment.

Selon l'invention, le système de remplacement d'un conteneur d'énergie d'alimentation d'un moteur d'entraînement d'un véhicule automobile est caractérisé en ce qu'il comprend des moyens matériels et logiciels de mise en oeuvre du procédé de remplacement défini précédemment.

Les moyens matériels peuvent comprendre au moins un robot manipulateur muni d'une interface de fixation d'un dispositif d'activation et de désactivation de moyens de verrouillage du conteneur.

Les moyens matériels peuvent comprendre un moyen de reconnaissance du type de véhicule automobile et/ou du type de conteneur d'énergie.

Selon l'invention, la station de remplacement d'un conteneur d'énergie d'alimentation d'un moteur d'entraînement d'un véhicule automobile est caractérisée en ce qu'elle comprend un système de remplacement défini précédemment.

Les dessins annexés représentent, à titre d'exemple, un mode de réalisation d'un système de remplacement d'un conteneur d'énergie selon l'invention.
La figure 1 est une vue schématique verticale transversale d'un mode de réalisation d'un système de remplacement d'un conteneur d'énergie selon l'invention, le système de remplacement se trouvant dans une première configuration.
La figure 2 est une vue schématique verticale transversale du mode de réalisation d'un système de remplacement d'un conteneur d'énergie selon l'invention, le système de remplacement se trouvant dans une deuxième configuration.

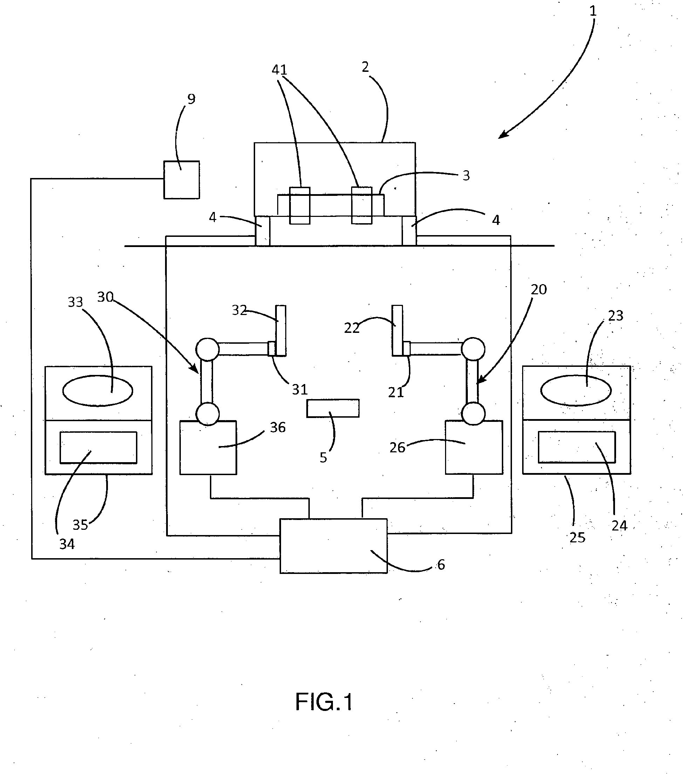

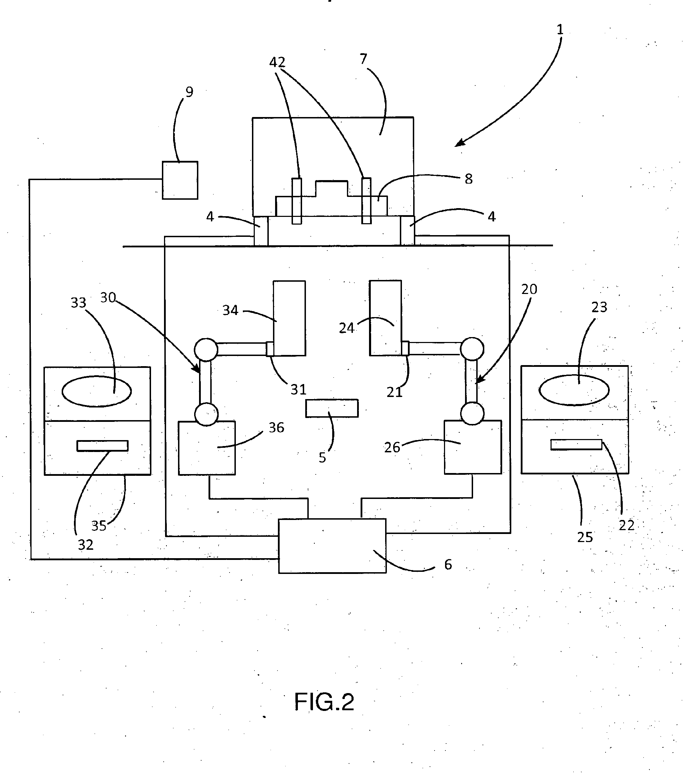

Le système 1 de remplacement d'un conteneur 3, 8 d'énergie d'alimentation d'un moteur d'entraînement d'un véhicule automobile 2, 7, représenté aux figures 1 et 2 dans deux configurations différentes, permet notamment le remplacement d'un conteneur d'énergie de type batterie d'accumulateurs électriques (batterie électrique) permettant l'alimentation électrique d'un moteur d'entraînement d'un véhicule automobile. Le système de remplacement comprend principalement un ou plusieurs outils 20, 30, un ou plusieurs magasins destinés au stockage de dispositif d'activation et de désactivation de moyens de verrouillage des conteneurs sur les véhicules automobiles et un dispositif 4 de mise en position du véhicule automobile. De préférence, les outils et/ou le dispositif de mise en position sont commandés par une unité de commande 6. Cette unité de commande comprend des moyens matériels et/ou logiciels de mise en oeuvre du procédé de remplacement qui est décrit plus bas. Les moyens logiciels peuvent notamment comprendre des programmes d'ordinateur et un support d'enregistrement contenant de tels programmes.

Sur les figures 1 et 2, le système de remplacement d'une batterie est représenté dans deux configurations différentes.

Sur la figure 1, le système de remplacement permet de remplacer une batterie 3 d'un premier type équipant un véhicule automobile 2 d'un premier type. Sur ce premier type de véhicule automobile, la batterie 3 est fixée au véhicule automobile grâce à un premier type de moyens de verrouillage 41. Ainsi, les outils 20, 30 permettant le montage et le démontage de la batterie 3 du véhicule automobile 2, c'est-à-dire permettant l'activation et la désactivation des moyens de verrouillage 41, comprennent des dispositifs 22, 32 d'activation et de désactivation des moyens de verrouillage d'un premier type. Ils sont reliés a reste 26, 36 de l'outil, constitué par exemple par un robot de manipulation, par des interfaces de fixation 21, 31.

Sur la figure 2, le système de remplacement permet de remplacer une batterie 8 d'un deuxième type équipant un véhicule automobile 7 d'un deuxième type. Sur ce deuxième type de véhicule automobile, la batterie 8 est fixée au véhicule automobile grâce à un deuxième type de moyens de verrouillage 42. Ainsi, les outils 20, 30 permettant le montage et le démontage de la batterie 8 du véhicule automobile 7, c'est-à-dire permettant l'activation et la désactivation des moyens de verrouillage 42, comprennent des dispositifs 24, 34 d'activation et de désactivation des moyens de verrouillage d'un deuxième type. Ils sont reliés au reste 26, 36 de l'outil par les interfaces de fixation 21, 31.

Lorsque des dispositifs d'activation et de désactivation des moyens de verrouillage ne sont pas utilisés, c'est-à-dire ne sont pas montés sur les outils, ils sont stockés dans des magasins 25, 35. Il n'a précédemment été évoqué que deux types de moyens de verrouillage et de dispositifs d'activation et de désactivation, mais il peut y en avoir plus de deux pour permettre le montage et le démontage de toutes les batteries de tous les véhicules disponibles sur le marché. Notamment, il peut y avoir, dans les magasins de stockage, un troisième type de dispositif d'activation et de désactivation 23.

L'unité de commande 6 permet de commander des actions des outils. Elle permet de commander les actions d'activation des moyens de verrouillage, de commander les actions de désactivation des moyens de verrouillage, de commander les actions de mouvements des outils et de commander les actions de changements de dispositifs d'activation et de désactivation. Toutes ces actions sont notamment déterminées par une information émise par un moyen 9 de reconnaissance de type de véhicule automobile et/ou de type de conteneurs d'énergie, le moyen de reconnaissance étant raccordé à l'unité de commande 6. Le moyen de reconnaissance peut notamment comprendre un système optique de reconnaissance de forme ou un lecteur d'étiquettes RFID.

Le système de remplacement peut également comprendre un dispositif 4 de mise en position du véhicule automobile. De préférence, ce dispositif agit par application d'actions mécaniques au niveau du châssis du véhicule automobile, par exemple au niveau de lisses ou de zones d'appui de cric. Par exemple, le dispositif comprend différents moyens, par exemple quatre, pouvant être déplacés automatiquement sous le châssis du véhicule automobile pour être situés au niveau de différentes zones déterminées par leurs positions longitudinales et transversales relativement au véhicule automobile. Une fois dans ses positions, les moyens peuvent exercer des actions mécaniques verticales sur le châssis du véhicule automobile pour que celui ci soit mis en position relativement à un axe vertical. De préférence, les déplacements et les actions des différents moyens sont eux aussi commandés par l'unité de commande 6 et, au moins partiellement, déterminés par les informations issues du moyen de reconnaissance 9.

Selon les véhicules automobiles et les batteries, la structure des moyens de verrouillage permettant de fixer les batteries sur les véhicules automobiles peut varier. De plus, le nombre de moyens de verrouillage peut également varier. Ainsi, le système de remplacement selon l'invention comprend un, deux, trois ou quatre outils ou plus encore. En effet, imaginons un système de remplacement comprenant quatre outils et devant remplacer une batterie sur un véhicule comprenant quatre moyens de verrouillage : les quatre outils peuvent être utilisés simultanément pour permettre un remplacement rapide de la batterie. Imaginons maintenant le même système de remplacement devant remplacer une batterie sur un véhicule comprenant un seul moyen de verrouillage : un seul des outils est utilisé.

Il est aussi possible que le système de remplacement ne comprenne qu'un outil. Dans le cas où il devrait remplacer une batterie sur un véhicule comprenant plusieurs moyens de verrouillage, l'outil pourrait être utilisé pour agir successivement sur chacun des moyens de verrouillage.

Ainsi, selon les critères retenus, on peut réaliser un système de remplacement plus ou moins rapide et plus ou moins coûteux.

De préférence, le système de remplacement comprend également un dispositif de table élévatrice 5 permettant de déposer la batterie usagée et de l'évacuer et permettant d'amener une nouvelle batterie et de la positionner sous le véhicule automobile ou dans le véhicule automobile.

Le système selon l'invention apporte différents avantages importants :
- il est compatible avec tous les types de batteries et tous les types de véhicules automobiles,
- son coût de réalisation est réduit dans la mesure où les éléments nécessaires à sa compatibilité avec tous les types de batteries et tous les types de véhicules automobiles sont réduits au strict nécessaire : le ou les dispositifs d'activation et de désactivation des moyens de verrouillage.

Le système de remplacement décrit précédemment permet de mettre en oeuvre le procédé de remplacement d'une batterie selon l'invention.

Un mode d'exécution du procédé de remplacement selon l'invention est décrit ci-après.

Dans une étape préliminaire, un véhicule automobile dont il faut remplacer la batterie est amené au niveau du système de remplacement.

Le mode d'exécution du procédé de remplacement comprend alors au moins une itération de la phase suivante, cette phase étant réalisée automatiquement, c'est-à-dire sans intervention humaine entre les différentes étapes qui la composent ou étant réalisée de manière semi-automatique, c'est-à-dire sans intervention humaine entre plusieurs des étapes qui la composent.

Dans une première étape, on reconnaît le type de batterie installée sur le véhicule automobile. Cette étape peut être mise en oeuvre lors de l'approche du véhicule automobile. Cette étape est assurée principalement grâce au moyen de reconnaissance décrit précédemment.

Dans une deuxième étape, on adapte, si besoin, au moins un outil à la batterie à déposer. Si l'outil ne correspond pas à celui nécessaire pour l'opération de dépose de la batterie, on l'adapte. Par exemple, dans le cas du système décrit précédemment, si une batterie de deuxième type doit être remplacée, les dispositifs d'activation et de désactivation 22, 32 du premier type sont déposés et stockés dans les magasins 25 et 35. Des dispositifs d'activation et de désactivation 24, 34 du deuxième type sont montés sur les outils en lieu et place des dispositifs précédemment déposés. En revanche, si l'outil correspond à celui nécessaire pour l'opération de dépose de la batterie, il n'est pas modifié.

Dans une troisième étape, on active l'au moins un outil, notamment en déplaçant le ou les dispositifs d'activation et de désactivation jusqu'à ce qu'ils viennent en contact avec les moyens de verrouillage, et on utilise l'au moins un outil pour démonter la batterie, c'est-à-dire on active le ou les dispositifs d'activation et de désactivation pour désactiver le ou les moyens de verrouillage.

Dans une quatrième étape, on dépose et on évacue la batterie usagée.

Dans une cinquième étape, on amène et on positionne une nouvelle batterie sous ou dans le véhicule automobile.

Dans une sixième étape, on utilise l'au moins un outil pour monter la nouvelle batterie, c'est-à-dire on utilise le ou les dispositifs pour activer le ou les moyens de verrouillage de la nouvelle batterie au véhicule automobile.

De préférence, avant la troisième étape, on reconnaît le type du véhicule automobile, et on met en position le véhicule automobile par rapport au sol sur lequel il repose. Pour ce faire, on peut activer le dispositif de mise en position exerçant des actions mécaniques sur le véhicule au niveau de lisses ou de zones d'appui de cric, après que les différents moyens qui le composent ont été positionnés sous le châssis du véhicule automobile.

Dans une étape finale, le véhicule automobile est évacué.

## Revendications

1. Procédé de remplacement d'un conteneur (3, 8) d'énergie d'alimentation d'un moteur d'entraînement d'un véhicule automobile (2, 7), comprenant au moins une itération d'une phase comprenant les étapes suivantes :
- reconnaître le type du conteneur à déposer,
- adapter, si besoin, au moins un outil (20, 30) au type de conteneur,
- utiliser l'au moins un outil pour démonter le conteneur,
- déposer le conteneur,
- utiliser l'au moins un outil pour remonter un nouveau conteneur,
**caractérisé en ce que** l'étape « adapter au moins un outil (20, 30) au type de conteneur » comprend une étape de démontage, sur l'au moins un outil, d'un premier dispositif (22, 32) d'activation et de désactivation d'un premier moyen de verrouillage du conteneur sur le véhicule automobile et une étape de montage, sur l'au moins un outil, d'un deuxième dispositif (24, 34) d'activation et de désactivation d'un deuxième moyen de verrouillage du conteneur sur le véhicule automobile.

2. Procédé de remplacement selon la revendication 1, **caractérisé en ce que** la phase comprend les étapes suivantes :
- reconnaître le type du véhicule automobile,
- mettre en position le véhicule automobile par rapport au sol sur lequel il repose.

3. Procédé de remplacement selon la revendication précédente, **caractérisé en ce que** l'étape « mettre en position le véhicule automobile par rapport au sol sur lequel il repose » comprend une étape d'activation d'un dispositif (4) exerçant des actions mécaniques sur le véhicule au niveau de lisses ou de zones d'appui de cric.

4. Procédé de remplacement selon l'une des revendications précédentes, **caractérisé en ce que** les dispositifs d'activation et de désactivation des moyens de verrouillage du conteneur sur le véhicule automobile sont montés sur au moins un robot manipulateur (26, 36).

5. Support d'enregistrement de données lisible par un calculateur sur lequel est enregistré un programme informatique comprenant des moyens de codes de programme informatique de mise en oeuvre des étapes du procédé de remplacement selon l'une des revendications précédentes.

6. Système (1) de remplacement d'un conteneur (3, 8) d'énergie d'alimentation d'un moteur d'entraînement d'un véhicule automobile (2, 7), **caractérisé en ce qu'**il comprend des moyens matériels (20, 30, 9, 6) et logiciels de mise en oeuvre du procédé de remplacement selon l'une des revendications 1 à 4.

7. Système (1) de remplacement selon la revendication précédente, **caractérisé en ce que** les moyens matériels comprennent au moins un robot manipulateur (26, 36) muni d'une interface (21, 31) de fixation d'un dispositif (22, 23, 24, 32, 33, 34) d'activation et de désactivation de moyens (41, 42) de verrouillage du conteneur.

8. Système (1) de remplacement selon l'une des revendications 6 à 7, **caractérisé en ce que** les moyens matériels comprennent un moyen (9) de reconnaissance du type de véhicule automobile et/ou du type de conteneur d'énergie.

9. Station de remplacement d'un conteneur d'énergie d'alimentation d'un moteur d'entraînement d'un véhicule automobile, **caractérisée en ce qu'**elle comprend un système de remplacement selon l'une des revendications 6 à 8.

## Patentansprüche

1. Verfahren zum Austauschen eines Behälters (3, 8) für die Versorgungsenergie eines Antriebsmotors eines Kraftfahrzeugs (2, 7), das wenigstens eine Wiederholung einer Phase enthält, die die folgenden Schritte umfasst:
- Erkennen des Typs des zu entfernenden Behälters,
- bei Bedarf Anpassen wenigstens eines Werkzeugs (20, 30) an den Behältertyp,
- Verwenden des wenigstens einen Werkzeugs, um den Behälter zu demontieren,
- Entfernen des Behälters,
- Verwenden des wenigstens einen Werkzeugs, um einen neuen Behälter zu montieren,
**dadurch gekennzeichnet, dass** der Schritt "Anpassen wenigstens eines Werkzeugs (20, 30) an den Behältertyp" einen Schritt des Demontierens mittels des wenigstens einen Werkzeugs einer ersten Vorrichtung (22, 32) zum Aktivieren und Deaktivieren eines ersten Verriegelungsmittels des Behälters an dem Kraftfahrzeug und einen Schritt des Montierens mittels des wenigstens einen Werkzeugs einer zweiten Vorrichtung (24, 34) zum Aktivieren und Deaktivieren eines zweiten Verriegelungsmittels des Behälters an dem Kraftfahrzeug umfasst.

2. Austauschverfahren nach Anspruch 1, **dadurch gekennzeichnet, dass** die Phase die folgenden Schritte umfasst:
- Erkennen des Typs des Kraftfahrzeugs,
- Bringen des Kraftfahrzeugs in Position in Bezug auf den Boden, auf dem es steht.

3. Austauschverfahren nach dem vorhergehenden Anspruch, **dadurch gekennzeichnet, dass** der Schritt "Bringen des Kraftfahrzeugs in Position in Bezug auf den Boden, auf dem es steht" einen Schritt des Aktivierens einer Vorrichtung (4), die mechanische Wirkungen auf das Fahrzeug auf Höhe der Längsträger oder Wagenheberabstützzonen ausübt, umfasst.

4. Austauschverfahren nach einem der vorhergehenden Ansprüche, **dadurch gekennzeichnet, dass** die Aktivierungs- und Deaktivierungsvorrichtungen der Verriegelungsmittel des Behälters an dem Kraftfahrzeug an wenigstens einem Manipulationsroboter (26, 36) angebracht sind.

5. Computerlesbarer Datenaufzeichnungsträger, in den ein Datenverarbeitungsprogramm aufgezeichnet ist, das Datenverarbeitungsprogramm-Codemittel enthält, um die Schritte des Austauschverfahrens nach einem der vorhergehenden Ansprüche auszuführen.

6. System (1) zum Austauschen eines Behälters (3, 8) für die Versorgungsenergie eines Antriebsmotors eines Kraftfahrzeugs (2, 7), **dadurch gekennzeichnet, dass** es Hardware-Mittel (20, 30, 9, 6) und Software-Mittel für die Ausführung des Austauschverfahrens nach einem der Ansprüche 1 bis 4 umfasst.

7. Austauschsystem (1) nach dem vorhergehenden Anspruch, **dadurch gekennzeichnet, dass** die Hardware-Mittel wenigstens einen Manipulationsroboter (26, 36) umfassen, der mit einer Schnittstelle (21, 31) für die Befestigung einer Vorrichtung (22, 23, 24, 32, 33, 34) zum Aktivieren und Deaktivieren von Verriegelungsmitteln (41, 42) des Behälters versehen ist.

8. Austauschsystem (1) nach einem der Ansprüche 6 bis 7, **dadurch gekennzeichnet, dass** die Hardware-Mittel ein Mittel (9) zum Erkennen des Typs des Kraftfahrzeugs und/oder des Typs des Energiebehälters umfassen.

9. Station zum Austauschen eines Behälters für die Versorgungsenergie eines Antriebsmotors eines Kraftfahrzeugs, **dadurch gekennzeichnet, dass** sie ein Austauschsystem nach einem der Ansprüche 6 bis 8 umfasst.

## Claims

1. Replacement method for replacing a container (3, 8) of input energy that powers a drive motor of a motor vehicle (2, 7), comprising at least one iteration of a phase comprising the following steps:
- recognizing the type of container to be removed,
- adapting, if necessary, at least one tool (20, 30) to suit the type of container,
- using the at least one tool to unfix the container,
- removing the container,
- using the at least one tool to refit a new container,
**characterized in that** the "adapting at least one tool (20, 30) to suit the type of container" step comprises a step of unfixing, from the at least one tool, a first device (22, 32) that activates and deactivates a first means of locking the container to the motor vehicle, and a step of fitting, to the at least one tool, a second device (24, 34) that activates and deactivates a second means of locking the container to the motor vehicle.

2. Replacement method according to Claim 1, **characterized in that** the phase comprises the following steps:
- recognizing the type of motor vehicle,
- bringing the motor vehicle into position with respect to the ground on which it is resting.

3. Replacement method according to the preceding claim, **characterized in that** the "bringing the motor vehicle into position with respect to the ground on which it is resting" step comprises a step of activating a device (4) that exerts mechanical actions on the vehicle at stringers or jacking points.

4. Replacement method according to one of the preceding claims, **characterized in that** the devices that activate and deactivate the means of locking the container to the motor vehicle are mounted on at least one manipulator robot (26, 36).

5. Support for recording computer-readable data and on which there is recorded a computer program containing computer program code means for implementing the steps of the replacement method according to one of the preceding claims.

6. Replacement system (1) for replacing a container (3, 8) of input energy for powering a drive motor of a motor vehicle (2, 7), **characterized in that** it comprises hardware means (20, 30, 9, 6) and software means for implementing the replacement method according to one of Claims 1 to 4.

7. Replacement system (1) according to the preceding claim, **characterized in that** the hardware means comprise at least one manipulator robot (26, 36) provided with an interface (21, 31) for fixing a device (22, 23, 24, 32, 33, 34) that activates and deactivates means (41, 42) of locking the container.

8. Replacement system (1) according to one of Claims 6 to 7, **characterized in that** the hardware means comprise a recognition means (9) for recognizing the type of motor vehicle and/or the type of energy container.

9. Replacement station for replacing a container of input energy that powers a drive motor of a motor vehicle, **characterized in that** it comprises a replacement system according to one of Claims 6 to 8.
